(19) Europäisches Patentamt
European Patent Office
Office européen des brevets

(11) **EP 2 398 101 B1**

(12) **EUROPÄISCHE PATENTSCHRIFT**

(45) Veröffentlichungstag und Bekanntmachung des Hinweises auf die Patenterteilung:
**06.11.2019 Patentblatt 2019/45**

(51) Int Cl.:
*H01M 4/86* (2006.01)  *H01M 4/92* (2006.01)
*C25B 1/46* (2006.01)  *C25B 11/03* (2006.01)

(21) Anmeldenummer: **11169760.3**

(22) Anmeldetag: **14.06.2011**

(54) **Gasdiffusionselektrode und Verfahren zu ihrer Herstellung**

Gas diffusion electrode and method for its production

Electrode de diffusion gazeuse et méthode de fabrication

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.06.2010 DE 102010030203**

(43) Veröffentlichungstag der Anmeldung:
**21.12.2011 Patentblatt 2011/51**

(73) Patentinhaber: **Covestro Deutschland AG**
**51373 Leverkusen (DE)**

(72) Erfinder:
• **Bulan, Andreas**
**40764 Langenfeld (DE)**
• **Kintrup, Jürgen**
**51373 Leverkusen (DE)**

• **Weber, Rainer**
**51519 Odenthal (DE)**

(74) Vertreter: **Levpat**
**c/o Covestro AG**
**Gebäude 4825**
**51365 Leverkusen (DE)**

(56) Entgegenhaltungen:
EP-A1- 0 014 896  EP-A1- 2 164 122
EP-A1- 2 172 999  EP-A2- 1 690 962
WO-A2-03/004726  WO-A2-2007/081538
WO-A2-2007/116095  DE-A1- 3 710 168
US-A1- 2004 072 683  US-A1- 2005 238 948
US-A1- 2007 148 531  US-A1- 2008 261 097
US-A1- 2010 124 686

**Beschreibung**

Die Erfindung betrifft eine Gasdiffusionselektrode, insbesondere eine Sauerstoffverzehrelektrode für die Reduktion von Sauerstoff im Alkalischen, insbesondere geeignet für den Einsatz in der Chloralkali-Elektrolyse, mit einer neuen speziellen Katalysatormorphologie sowie eine Elektrolysevorrichtung. Die Erfindung betrifft ferner ein Herstellungsverfahren für die Sauerstoffverzehrelektrode sowie ihre Verwendung in der Chloralkali-Elektrolyse oder Brennstoffzellentechnik.

Die Erfindung geht aus von an sich bekannten Sauerstoffverzehrelektroden, die als Gasdiffusionselektroden ausgebildet sind und üblicherweise einen elektrisch leitenden Träger und eine Gasdiffusionsschicht und eine katalytisch aktiven Komponente umfassen.

Sauerstoffverzehrelektroden, nachfolgend SVE genannt, stellen eine Form von Gasdiffusionselektroden dar. Gasdiffusionselektroden sind Elektroden, in denen die drei Aggregatzustände - fest, flüssig und gasförmig - miteinander in Kontakt stehen und der feste, Elektronen leitende Katalysator eine elektrochemische Reaktion zwischen der flüssigen und der gasförmigen Phase katalysiert. Der feste Katalysator ist dabei üblicherweise zu einer porösen Folie üblicherweise mit einer Dicke von mehr als 200 µm verpresst.

Verschiedene Vorschläge zum Betrieb der Sauerstoffverzehrelektroden in Elektrolysezellen in technischer Größe sind aus dem Stand der Technik grundsätzlich bekannt. Die Grundidee dabei ist, die Wasserstoff entwickelnde Kathode der Elektrolyse (beispielsweise in der Chloralkali-Elektrolyse) durch die Sauerstoffverzehrelektrode (Kathode) zu ersetzten. Eine Übersicht über die möglichen Zelldesigns und Lösungen kann der Veröffentlichung von Moussallem et al "Chlor-Alkali Electrolysis with Oxygen Depolarized Cathodes: History, Present Status and Future Prospects", J. Appl. Electrochem. 38 (2008) 1177-1194, entnommen werden.

Die Sauerstoffverzehrelektrode - im folgenden auch kurz SVE genannt - muss eine Reihe von grundsätzlichen Anforderungen erfüllen, um in technischen Elektrolyseuren einsetzbar zu sein. So muss der Katalysator und alle anderen verwendeten Materialien chemisch stabil sein gegen Natronlauge von ca. 32 Gew.% und gegenüber reinem Sauerstoff bei einer Temperatur von typischerweise 80 - 90°C. Ebenso wird ein hohes Maß an mechanischer Stabilität gefordert, dass die Elektroden in Elektrolyseuren einer Größe von üblicherweise mehr als 2 m² Fläche (technische Größe) eingebaut und betrieben werden. Weitere Eigenschaften sind: eine hohe elektrische Leitfähigkeit, eine geringe Schichtdicke, eine hohe innere Oberfläche und eine hohe elektrochemische Aktivität des Elektrokatalysators. Geeignete hydrophobe und hydrophile Poren und eine entsprechende Porenstruktur zur Leitung von Gas und Elektrolyt sind ebenso notwendig, wie eine Dichtigkeit, so dass Gas und Flüssigkeitsraum voneinander getrennt bleiben. Die Langzeitstabilität und geringe Herstellkosten sind weitere besondere Anforderungen an eine technisch nutzbare Sauerstoffverzehrelektrode.

Eine weitere Entwicklungsrichtung zur Nutzung der SVE-Technologie in der Chlor-AlkaliElektrolyse stellt die zero gap Technologie dar. Hierbei ist die SVE in direktem Kontakt mit der Ionenaustauschermembran, die in der Elektrolysezelle den Anoden- vom Kathodenraum trennt. Ein Natronlaugespalt ist hierbei nicht vorhanden. Diese Anordnung wird üblicherweise auch in der Brennstoffzellen-Technologie angewandt. Nachteilig hierbei ist, dass die sich bildenden Natronlauge durch die SVE zur Gasseite geleitet werden muss und anschließend an der SVE nach unten fließt. Hierbei darf es nicht zu einer Verstopfung der Poren in der SVE durch die Natronlauge oder zu Auskristallisation von Natronlauge in den Poren kommen. Es hat sich herausgestellt, dass hierbei auch sehr hohe Natronlauge-Konzentrationen entstehen können, wobei die Ionenaustauschermembran gegen diese hohen Konzentrationen nicht langzeitstabil ist (Lipp et al, J. Appl. Electrochem. 35 (2005)1015 - Los Alamos National Laboratory "Peroxide formation during chlor-alkali electrolysis with carbon-based ODC").

Eine wichtige Voraussetzung für den Betrieb von Gasdiffusionselektroden ist, dass sowohl die flüssige als auch die gasförmige Phase gleichzeitig im Porensystem der Elektroden vorliegen können. Wie dies zu realisieren ist, wird über die Young-Laplace-Gleichung ersichtlich:

$$p = \frac{2\,\sigma\cos\theta}{r}$$

Der Gasdruck p steht also mit der Flüssigkeit im Porensystem in Relation über den Porenradius r der Oberflächenspannung σ der Flüssigkeit und dem Benetzungswinkel Θ. Diese Gleichung ist jedoch nur als Orientierungshilfe zu verstehen, weil zu viele Parameter unbekannt oder schwer zu bestimmen sind:

- Bei der Oberflächenspannung muss die Differenz der Oberflächenspannung des Festkörpers und der Flüssigkeit betrachtet werden. Die Oberflächenspannung von Katalysatoren wie z.B. Platin auf Kohlenstoff oder Silber sind aber kaum messbar.

- Der Benetzungswinkel auf einer ebenen Fläche lässt sich bestimmen. Eine einzelne Pore hingegen kann nicht untersucht werden, da hierbei das Porensystem der gesamten Elektrode bestimmt würde.

- Der Benetzungswinkel ändert sich auch unter Einfluss des elektrischen Feldes und der Temperatur, beides lässt sich innerhalb der Elektrode nicht messen.

Zur Schaffung von Gas- und Flüssigkeitsräumen in einer SVE müssen Poren erzeugt werden, die unterschiedlichen Porenradien aufweisen oder unterschiedlichen Oberflächenspannungen. Neben den Benetzungseigenschaften muss die SVE über eine gute elektrische Leitfähigkeit verfügen, damit die Elektronen mit möglichst geringem ohmschem Widerstand transportiert werden können.

Eine SVE trennt beispielsweise in der Chlor-Alkali-Elektroyse bei der finite gap Anordnung einen Elektrolytraum von einem Gasraum. Dabei darf wie oben beschrieben weder Gas aus dem Gasraum in den Elektrolytraum gelangen, noch Elektrolyt aus dem Elektrolytraum in den Gasraum. Bei technischen Elektrolyseuren sollte die Sauerstoffverzehrkathode den hydrostatischen Druck, der am Boden der technischen Elektrolysezelle herrscht, von beispielsweise 170 mbar aushalten. Da eine Gasdiffusionselektrode ein Porensystem aufweist, gelangt immer eine geringe Menge an Flüssigkeit in den Gasraum bzw. Gas in den Flüssigkeitsraum. Die Menge hängt dabei vom Aufbau der Zelle des Elektrolyseurs ab. Die SVE sollte bei einer Druckdifferenz zwischen dem Gas- und dem Flüssigkeitsraum im Bereich von 10-60 mbar dicht sein. Hierbei ist mit dicht gemeint, dass Austreten von Gasblasen in den Elektrolytraum mit dem bloßen Auge beobachtbar ist. Mit flüssigkeitsdicht ist gemeint, dass eine Flüssigkeitsmenge von nicht mehr als 10 $g/(h*cm^2)$ durch die SVE tritt (wobei g für die Masse an Flüssigkeit, h für eine Stunde und $cm^2$ für die geometrische Elektrodenoberfläche steht). Tritt jedoch zuviel Flüssigkeit durch die SVE so kann diese nur an der der Gasseite zugewandten Seite nach unten abfließen. Dabei kann sich ein Flüssigkeitsfilm ausbilden, der den Gaszutritt zur SVE behindert und dadurch die Leistungsfähigkeit der SVE extrem negativ beeinflusst (Sauerstoff-Unterversorgung). Tritt zuviel Gas in den Elektrolytraum ein, so müssen die Gasblasen aus dem Elektrolytraum herausgeführt werden können. In jedem Fall blenden die Gasblasen einen Teil der Elektroden- und der Membranfläche ab, was zu einer Stromdichteverschiebung und damit im galvanostatischen Betrieb der Zelle zu einer lokalen Stromdichteerhöhung und über die Zelle zu einer unerwünschten Zellspannungserhöhung führt.

Eine alternative Möglichkeit stellt der Einsatz von Sinterelektroden dar. Dabei können beispielsweise drei verschiedene Korngrößen in unterschiedlichen Schichten der SVE eingesetzt wurden. So kann eine Deckschicht aus feinkörnigem Material, eine Arbeitsschicht aus verschiedenen Fraktionen und eine Gasleitschicht aus grobkörnigem Material bestehen. (DE 1.219.553).

Nachteil dieser Elektroden ist, dass die Elektroden vergleichsweise dick und schwer sind - übliche Dicken betragen ca. 2 mm. Die einzelnen Schichten müssen sehr dünn, aber fehlerfrei sein. Der Metallpreis für diese Art Elektroden ist vergleichsweise hoch und die Elektroden konnten nicht in kontinuierlichen Herstellungsverfahren hergestellt werden.

Ein weiterer Nachteil dieser Art von Gasdiffusionselektroden ist, dass diese sehr empfindlich auf Druckschwankungen reagieren und z.B. in technischen Elektrolyseuren nicht eingesetzt werden können, da hier aufgrund der Bauhöhe der Elektrolyt am Boden einer Elektrolysezelle einen hohen hydrostatischen Druck aufweist, der auf die Gasdiffusionselektrode einwirkt und hierdurch das Porensystem flutet.

Hergestellt wurden solche Elektroden durch Aufstreuen und anschließendes Sintern oder Heißpressen. Um mehrschichtige Elektroden zu erzeugen, wurde also zunächst ein feinkörniges Material in eine Matrize gestreut und geglättet. Anschließend wurden die andere Materialien übereinander in Schichten aufgetragen und dann verpresst. Die Herstellung war nicht nur fehlerträchtig, sondern auch zeitaufwändig und schwer zu automatisieren.

Die EP 797 265 (Degussa) beschreibt ein Gasdiffusionselektrode und ein Herstellverfahren für eine Gasdiffusionselektrode, die zu einer bimodalen Porenverteilung in der Elektrodenschicht führt. Hierbei wird ein Katalysator mit einem protonenleitenden Ionomer dispergiert. Die Gesamtporosität der Elektrode beträgt dabei von 40 bis 75 % und setzt sich aus kleinen Poren mit mittleren Durchmessern bis zu 500 nm und großen Poren mit mittleren Durchmessern von 1000 bis 2000 nm zusammen. Die kleinen Poren werden bei der Verdunstung der Lösungsmittel nach dem Aufsprühen der Beschichtungsdispersion auf eine heiße Membran gebildet. Die großen Poren entstehen bei der Zersetzung oder der Herauslösung eines vorher zugegebenen Porenbildners. Ihr mittlerer Durchmesser kann daher durch die Korngröße des verwendeten Porenbildners beeinflusst werden. Die bimodale Porenverteilung soll eine Verbesserung des Stofftransportes in der Elektrodenschicht bewirken. Durch die Makroporen kann das Reaktionsgas schnell in die Tiefe der Elektrodenschicht gelangen und das gebildete Reaktionswasser abgeführt werden. Die kleinen Poren übernehmen dann den Transport im ionenleitenden Polymer bis hin zu den Katalysatorpartikeln. Die hierbei zurückzulegenden Strecken sind nur noch kurz, so dass der verlangsamte Transport in den kleinen Poren die Leistungsfähigkeit der Elektrode nicht wesentlich beeinträchtigt. Eine deutliche Verbesserung des Transports in der Elektrodenschicht gegenüber konventionellen Beschichtungen wird erst bei Gesamtporositäten von mehr als 40 % beobachtet. Die Versorgung des Elektrokatalysators mit den Reaktionsmedien nimmt mit steigender Porosität zu. Mit steigender Porosität nimmt allerdings die Menge des verfügbaren Elektrokatalysators und des Ionomers in der Die Schrift US -A- 6.503.655 beschreibt eine oberflächlich glatte, hydrophobe Gasdiffusionselektrode für den Einsatz in der PEM-Brennstoffzelle, die Porendurchmesser von 10 bis 10.000nm aufweist. Die Permeabilität der Elektroden für Stickstoff sollte größer als > $10^{-6}$ $m^2$/s bei Normaldruck sein, vorzugsweise > $10^{-5}$ $m^2$/s. Hierzu sollten die größten Poren einen Durchmesser mehr als 100 nm aufweisen, vorzugsweise sollte der Durchmesser 500 bis 10.000 nm betragen. Wichtig ist auch ein hydrophober Charakter der Elektroden. Dadurch wird nämlich verhindert, dass sich das bei der elektrochemischen Reaktion zwischen Wasserstoff und Sauerstoff gebildete Wasser in den Poren ansammelt und diese verstopft. Um die genannten Anforderungen zu erfüllen, werden in Gasdiffusionselektroden modifizierte Kohlepapiere eingesetzt, d.h. Kohlepapiere, die an der Oberfläche mit Ruß oder Graphit verdichtet sind. Diese Materialien sind aber hinsichtlich Oberflächenglätte und Porengröße nicht ausreichend. In der US 6.503.655 wird keine Aussage zum Porenvolumen oder der Porosität gemacht.

Aus der Offenlegungsschrift WO07116095A2 ist eine Gasdiffusionselektrode für die Sauerstoffreduktion in wässrigen alkalischen Medien, insbesondere für die Chloralkalielektrolyse. bekannt geworden aufweisend einen Träger, der elektrisch leitend ist, und eine poröse Beschichtung, die auf einem elektrochemisch aktiven Katalysator und einem hydrophoben Material basiert, wobei die Elektrode eine dem Sauerstoff enthaltenden Gas und eine dem alkalischen Elektrolyten zugewandte Seite aufweist, dadurch gekennzeichnet, wobei der Katalysator als katalytisch aktive Komponente ein Edelmetall enthält und das hydrophobe Material ein hydrophobes Polymer umfasst und der Träger der Gasdiffusionselektrode auf Silber basiert.

Die Schrift WO07116095A2 enthält keine näheren Hinweise zur besonderen Auswahl des Porenvolumens der den Katalysator enthaltenden Beschichtung eines ausgewählten Porendurchmessers sowie der Gesamtbeladung an katalytisch aktiver Komponente um die Sauerstoffreduktion im Alkalischen zu verbessern.

Die Aufgabe der vorliegenden Erfindung besteht darin, eine Sauerstoffverzehrelektrode für die Sauerstoffreduktion im Alkalischen, beispielsweise für den Einsatz in der Chloralkali-Elektrolyse, bereitzustellen, die die vorstehenden Nachteile überwindet und eine niedrigere Betriebsspannung bei der Chloralkali-Elektrolyse ermöglicht.

Gegenstand der Erfindung mit der die gestellte Aufgabe gelöst wird ist eine Gasdiffusionselektrode für die Sauerstoffreduktion in wässrigen alkalischen Medien, mindestens aufweisend einen Träger, der insbesondere elektrisch leitend ist, und einer porösen Beschichtung, die auf einem elektrochemisch aktiven Katalysator und einem hydrophoben Material basiert, wobei die Elektrode eine dem Sauerstoff enthaltenden Gas und eine dem alkalischen Elektrolyten zugewandte Seite aufweist, wobei der Katalysator als katalytisch aktive Komponente ein Edelmetall insbesondere Silber oder Platin, bevorzugt Silber enthält und das hydrophobe Material ein hydrophobes Polymer umfasst, und der Träger der Gasdiffusionselektrode auf Nickel, Silber oder einer Kombination von Nickel und Silber basiert, dadurch gekennzeichnet, dass die den Katalysator enthaltende Beschichtung ein Porenvolumen von 20 bis 300 $mm^3$/g, bevorzugt von 50 bis 200 $mm^3$/g aufweist und einen Porendurchmesser im Bereich von 200 bis 8000 nm, bevorzugt von 600 bis 6000 nm aufweist, und dass die Elektrode eine Gesamtbeladung an katalytisch aktiver Komponente in einem Bereich von 5 mg/$cm^2$ bis 300 mg/$cm^2$ aufweist.

Es wurde überraschend gefunden, dass neben der teilweise hydrophilen und teilweise hydrophoben Eigenschaft der Beschichtung die Porosität der Gasdiffusionselektrode und insbesondere die Kombination aus Porendurchmesser und Porenvolumen entscheidend für die Leistungsfähigkeit der Gasdiffusionselektrode ist.

Bevorzugt ist eine Ausführung der neuen Gasdiffusionselektrode, die dadurch gekennzeichnet ist, dass die Beschichtung eine unimodale Porenverteilung aufweist.

Bevorzugt ist ferner eine Gasdiffusionselektrode, bei der die Porosität der katalytisch aktiven Beschichtung von 10 bis 70%, bevorzugt von 20 bis 60% beträgt.

Die Dicke der der katalytisch aktiven Beschichtung der Gasdiffusionselektrode beträgt bevorzugt von 20 bis 1000μm, besonders bevorzugt von 100 bis 800μm, ganz besonders bevorzugt 200 bis 600μm.

Weiter bevorzugt ist eine Ausführung der neuen Gasdiffusionselektrode, in der die hydrophobe Komponente ein hydrophobes Polymer, bevorzugt ein fluorsubstituiertes Polymer, besonders bevorzugt Polytetraflourethylen (PTFE) aufweist.

Eine weitere bevorzugt Ausführungsvariante der Gasdiffusionselektrode ist dadurch gekennzeichnet, dass die Elektrode eine Gesamtbeladung an katalytisch aktiver Komponente in einem Bereich von 10 mg/$cm^2$ bis 250 mg/$cm^2$ aufweist.

Die neue Gasdiffusionselektrode weist einen Träger bestehend aus einem Werkstoff ausgewählt aus der Reihe Silber, Nickel, oder einer Kombination von Nickel und Silber auf, aus dem flächige textile Strukturen hergestellt wurden.

Der elektrisch leitende Träger kann grundsätzlich ein Netz, Vlies, Schaum, Gewebe, Geflecht, Streckmetall sein. Der Träger besteht aus Nickel, Silber oder versilbertem Nickel. Der Träger kann einlagig oder mehrlagig sein. Ein mehrlagiger Träger kann aus zwei oder mehreren übereinander angeordneten Netzen, Vliesen, Schäumen, Geweben, Geflechten, Streckmetallen aufgebaut sein. Die Netze, Vliese, Schäume, Gewebe, Geflechte, Streckmetalle. können dabei unterschiedlich sein. Sie können z.B. unterschiedlich dick oder unterschiedlich porös sein oder eine unterschiedliche Maschenweite aufweisen. Zwei oder mehrere Netze, Vliese, Schäume, Gewebe, Geflechte, Streckmetalle können z.B. durch Sintern oder Schweißen miteinander verbunden sein. Vorzugsweise wird ein Netz aus Nickel mit einem Drahtdurchmesser von 0,04 bis 0,4 mm und einer Maschenweite von 0,2 bis 1,2 mm verwendet.

Bevorzugt basiert der Träger der Gasdiffusionselektrode auf Nickel, Silber oder einer Kombination von Nickel und Silber.

Bevorzugt ist auch eine Form der Gasdiffusionselektrode, bei der der Träger in Form eines Netzes, Gewebes, Gewirkes, Gestrickes, Vlieses, Streckmetalls oder Schaums, bevorzugt eines Gewebes vorliegt.

Im Prinzip können die verschiedenen Formen der NaCl-SVE-Elektrolyse unterschieden werden durch die Art wie die SVEK eingebaut wird und wie sich hierdurch der Abstand zwischen der Ionenaustauschermembran und der SVEK einstellt. Viele Zelldesigns erlauben einen Spalt zwischen der Ionenaustauschermembran und der SVEK, der sogenannten finite-gap Anordnung. Der Spalt kann dabei 1 bis 3mm betragen, der Spalt wird von Natronlauge durchströmt. Die Strömung kann in einer aufrechten Anordnung der Elektrode von oben nach unten erfolgen (Prinzip der Fallfilm-Zelle siehe z.B. WO 2001/057290A2) oder von unten nach oben (Gastaschenprinzip, siehe z.B. DE 4.444.114A2)

Eine besondere Ausführungsform der Erfindung stellen kunststoffgebundene Elektroden dar, wobei die Gasdiffusionselektrode sowohl mit hydrophilen als auch hydrophoben Bereichen ausgestattet werden. Diese Gasdiffusionselektroden sind, insbesondere bei Einsatz von PTFE (Polytetrafluorethylen) chemisch sehr beständig.

Bereiche mit hohem PTFE Anteil sind hydrophob, hier kann kein Elektrolyt eindringen, dagegen jedoch an Stellen mit niedrigem PTFE-Anteil oder keinem PTFE. Der Katalysator selbst muss hierbei hydrophil sein.

Die Herstellung solche PTFE-Katalysator-Mischungen erfolgt prinzipiell beispielsweise durch Einsatz von Dispersionen aus Wasser, PTFE und Katalysator. Zur Stabilisierung von PTFE-Partikel in der wässrigen Lösung werden insbesondere Emulgatoren zugesetzt und zur Verarbeitung der Dispersion bevorzugt Verdickungsmitteln eingesetzt. Alternative zu diesem Nassherstellungsverfahren ist die Herstellung durch Trockenmischung aus PTFE-Pulver und Katalysatorpulver.

Die erfindungsgemäßen SVE können wie oben beschrieben, durch Nass- bzw. Dispersions- und Trockenverfahren hergestellt werden. Besonders bevorzugt ist das Trockenherstellungsverfahren.

Dispersionsverfahren werden hauptsächlich für Elektroden mit polymerem Elektrolyten gewählt - so z. B. erfolgreich eingeführt bei der PEM (Polymer-Elektrolyt-Membran) Brennstoffzelle oder der HCl-SVE-Membran-Elektrolyse (WO2002/18675).

Bei Einsatz der SVE in flüssigen Elektrolyten liefert das das Trockenverfahren geeignetere SVEs. Beim Nass-/bzw. Dispersionsverfahren kann durch Verdampfen des Wassers und Sintern des PTFEs bei 340 °C auf ein starkes mechanisches Verpressen verzichtet werden. Diese Elektroden sind üblicherweise sehr offenporig. Aber auf der anderen Seite können bei falschen Trocknungsbedingungen schnell Risse in der Elektrode entstehen, durch die flüssiger Elektrolyt dringen kann. Daher hat sich für Anwendungen mit flüssigem Elektrolyten wie die der Zink-Luft-Batterie oder der alkalische Brennstoffzelle das Trockenverfahren durchgesetzt.

Bei Trockenverfahren wird der Katalysator mit einer Polymerkomponente (bevorzugt PTFE) intensiv vermischt. Die Pulvermischung kann durch Pressen, vorzugsweise durch Verpressen mittels Walzprozess, zu einem folienartigen Gebilde geformt werden, welches anschließend auf den Träger aufgebracht wird (siehe z.B. DE 3.710.168 A2; EP 144.002 A2). Eine ebenfalls anwendbare bevorzugte Alternative beschreibt die DE 102005023615 A2; hierbei wird die Pulvermischung auf einen Träger aufgestreut und gemeinsam mit diesem verpresst.

Beim Trockenverfahren wird in einer besonders bevorzugten Ausführung die Elektrode aus einer Pulvermischung bestehend aus Silber und/oder dessen Oxid und PTFE hergestellt. Ebenfalls können dotierte Silber und/oder dessen Oxid oder Mischungen aus Silber und/oder dessen Oxid mit Silber und PTFE eingesetzt werden. Die Katalysatoren und PTFE werden beispielsweise wie in der US 6.838.408 beschrieben in einem Trockenmischverfahren behandelt und das Pulver zu einem Fell kompaktiert.

Das Fell wird anschließend gemeinsam mit einem mechanischen Träger verpresst. Sowohl der Fell-Bildungsprozess als auch die Verpressung von Fell und Träger kann beispielsweise durch einen Walzprozess erfolgen. Die Presskraft hat unter anderem einen Einfluss auf den Porendurchmesser und die Porosität der SVE. Der Porendurchmesser und die Porosität haben Einfluss auf die Performance der SVE.

Alternativ kann die Herstellung der erfindungsgemäße SVE gemäß der DE 10.148.599 dadurch erfolgen, dass die Katalysator-Pulver-Mischung direkt auf einen Träger aufgebracht wird.

Dabei besteht die Pulvermischung wenigstens aus einem Katalysator und einem Binder. Als Katalysator dient ein Metall, eine Metallverbindung, eine nichtmetallische Verbindung oder eine Mischung von Metallen, Metallverbindungen oder nichtmetallischen Verbindungen. Bevorzugt handelt es sich bei dem Katalysator um Silber, Silber-I-Oxid, Silber-II-Oxid oder deren Gemische. Bei dem Binder handelt es sich vorzugsweise um ein hydrophobes Polymer, besonders bevorzugt um Polytetrafluorethylen (PTFE). Besonders bevorzugt werden Pulvermischungen eingesetzt, die zu 70 bis 99,5 Gew.% aus Silber-I-Oxid, 0 bis 15 Gew.% aus Silber-Metall-Pulver und 0,5 bis 17 Gew.% PTFE bestehen. Als Pulvermischung kann auch eine Mischung eingesetzt werden, wie sie z.B. aus DE 101 30 441 A bekannt ist. Dabei wurde der Katalysator so hergestellt, dass dieser sich auf der Oberfläche von PTFE-Partikeln befindet.

Die Pulvermischung kann zusätzliche weitere Komponenten enthalten, z.B. Füllstoffe, enthaltend Nickel-Metall-, Raney-Nickel-, Raney-Silber-Pulver oder deren Gemische. Die Pulvermischung, enthaltend einen Katalysator und einen Binder, bildet nach dem Aufbringen auf das Träger und dem Verpressen mit dem Träger eine elektrochemisch aktive Schicht der SVE.

Das Herstellen der Pulvermischung erfolgt in einer besonders bevorzugten Ausführung durch Mischen der Pulver des Katalysators und des Binders sowie ggf. weiterer Komponenten. Das Mischen geschieht bevorzugt in einer Mischvorrichtung, welche schnell rotierende Mischelemente, wie z.B. Schlagmesser aufweisen. Zur Vermischung der Komponenten der Pulvermischung rotieren die Mischelemente bevorzugt mit einer Geschwindigkeit von 10 bis 30 m/s oder mit einer Drehzahl von 4000 bis 8000 U/min. Wird der Katalysator, z.B. Silber-I-Oxid, mit PTFE als Binder in einer derartigen Mischvorrichtung vermischt, wird das PTFE zu einer fadenähnlichen Struktur verstreckt und wirkt auf diese Weise als Binder für den Katalysator. Nach dem Vermischen wird die Pulvermischung vorzugsweise gesiebt. Das Sieben erfolgt vorzugsweise mit einer Siebvorrichtung, welche mit Netzen o.dgl. ausgerüstet ist, deren Maschenweite 0,04 bis 2 mm betragen.

Durch das Mischen in der Mischvorrichtung mit rotierenden Mischelementen wird Energie in die Pulvermischung eingetragen, wodurch sich die Pulvermischung stark erwärmt. Bei zu starker Erwärmung des Pulvers wird eine Verschlechterung der SVE-Performance beobachtet, so dass die Temperatur während des Mischprozesses bevorzugt 35 bis 80°C beträgt. Dies kann durch Kühlung während des Vermischens erfolgen, z.B. durch Zusatz eines Kühlmittels, z.B. flüssigen Stickstoffs oder anderer inerter wärmeaufnehmender Substanzen. Eine weitere Möglichkeit der Temperaturkontrolle kann dadurch erfolgen, dass das Mischen unterbrochen wird, um die Pulvermischung abkühlen zu lassen oder durch Auswahl geeigneter Mischaggregate oder Veränderung der Füllmenge im Mischer.

Das Aufbringen der Pulvermischung auf den elektrisch leitfähigen Träger erfolgt beispielsweise durch Streuen. Das Streuen der Pulvermischung auf den Träger kann z.B. durch ein Sieb geschehen. Besonders vorteilhaft wird auf das Träger eine rahmenförmige Schablone aufgelegt, wobei die Schablone bevorzugt so gewählt wird, dass sie den Träger gerade umfasst. Alternativ kann die Schablone auch kleiner als die Fläche des Trägers gewählt werden. In diesem Fall verbleibt nach dem Aufstreuen der Pulvermischung und dem Verpressen mit dem Träger ein unbeschichteter Rand des Trägers frei von elektrochemisch aktiver Beschichtung. Die Dicke der Schablone kann entsprechend der auf das Träger aufzubringenden Menge an Pulvermischung gewählt werden. Die Schablone wird mit der Pulvermischung gefüllt. Überschüssiges Pulver kann mittels eines Abstreifers entfernt werden. Danach wird die Schablone entfernt.

In dem nachfolgenden Schritt wird die Pulvermischung in einer besonders bevorzugten Ausführung mit dem Träger verpresst. Das Verpressen kann insbesondere mittels Walzen erfolgen. Vorzugsweise wird ein Walzenpaar eingesetzt. Es kann jedoch auch eine Walze auf einer im Wesentlichen flachen Unterlage eingesetzt werden, wobei entweder die Walze oder die Unterlage bewegt wird. Ferner kann das Verpressen durch einen Pressstempel erfolgen. Die Kräfte beim Verpressen betragen insbesondere 0,01 bis 7 kN/cm.

Ein erfindungsgemäße SVE kann grundsätzlich einlagig oder mehrlagig aufgebaut sein. Um mehrlagige SVEs herzustellen, werden Pulvermischungen mit unterschiedlichen Zusammensetzungen und unterschiedlichen Eigenschaften schichtweise auf den Träger aufgebracht. Die Schichten unterschiedlicher Pulvermischungen werden dabei bevorzugt nicht einzeln mit dem Träger verpresst, sondern zunächst nacheinander aufgebracht und anschließend in einem Schritt gemeinsam mit dem Träger verpresst. Beispielsweise kann eine Schicht aus einer Pulvermischung aufgetragen werden, die einen höheren Gehalt des Binders, insbesondere einen höheren Gehalt an PTFE, aufweist als die elektrochemisch aktive Schicht. Eine solche Schicht mit hohem PTFE-Gehalt von 6 bis 100%. kann als Gasdiffusionsschicht wirken.

Alternativ oder zusätzlich kann auch eine Gasdiffusionsschicht aus PTFE aufgebracht werden. Eine Schicht mit hohem Gehalt an PTFE kann zum Beispiel als unterste Schicht direkt auf den Träger aufgebracht werden. Weitere Schichten mit unterschiedlicher Zusammensetzung können zur Herstellung der Gasdiffusionselektrode aufgebracht werden. Bei mehrlagigen SVEs können die gewünschten physikalischen und/oder chemischen Eigenschaften gezielt eingestellt werden. Hierzu zählen u.a. die Hydophobie bzw. Hydrophilie der Schicht, die elektrische Leitfähigkeit, die Gasdurchlässigkeit. So kann beispielsweise ein Gradient einer Eigenschaft aufgebaut werden, indem das Maß der Eigenschaft von Schicht zu Schicht zunimmt oder abnimmt.

Die Dicke der einzelnen Schichten der SVE kann durch die Menge an Pulvermischung, die auf den Träger aufgebracht wird, sowie durch die Presskräfte beim Verpressen eingestellt werden. Die Menge der aufgetragenen Pulvermischung kann beispielsweise durch die Dicke der Schablone eingestellt werden, welche auf den Träger gelegt wird, um die Pulvermischung auf den Träger zu streuen. Nach dem Verfahren der DE 10.148.599 wird aus der Pulvermischung ein Fell erzeugt. Dabei kann die Dicke bzw. Dichte des Fells nicht unabhängig voneinander eingestellt werden, da die Parameter der Walzen, wie Walzendurchmesser, Walzenabstand, Walzenwerkstoff, Zuhaltekraft und Umfangsgeschwindigkeit, einen entscheidenden Einfluss auf diese Größen hat.

Die Presskraft beim Verpressen der Pulvermischung bzw. Schichten aus unterschiedlichen Pulvermischungen mit dem Träger erfolgt z.B. durch Walzenpressen mit einer Linienpresskraft im Bereich von 0,01 bis 7 kN/cm.

Die neue Sauerstoffverzehrelektrode wird bevorzugt als Kathode geschaltet, insbesondere in einer Elektrolysezelle für die Elektrolyse von Alkalichloriden, bevorzugt von Natriumchlorid oder Kaliumchlorid, besonders bevorzugt von Natriumchlorid.

Alternativ kann die Sauerstoffverzehrelektrode bevorzugt als Kathode in einer Brennstoffzelle geschaltet werden, bevorzugt in einer alkalischen Brennstoffzelle.

Weiterer Gegenstand der Erfindung ist daher die Verwendung der neuen Sauerstoffverzehrelektrode zur Reduktion von Sauerstoff in Gegenwart von alkalischen Elektrolyten, z. B. von Natronlauge insbesondere in der alkalischen Brennstoffzelle, die Verwendung bei der Trinkwasseraufbereitung, beispielsweise zur Herstellung von Natriumhypochlorit als Bleichlösung oder die Verwendung in der Chlor-Alkalielektrolyse, insbesondere zur Elektrolyse von LiCl, KCl oder NaCl oder die Verwendung als Elektrode in einer Metall/Luft-Batterie.

Die neue SVE wird besonders bevorzugt bei der Chlor-Alkali-Elekrolyse und hier insbesondere bei der Natriumchlorid-(NaCl)-Elektrolyse eingesetzt.

Gegenstand der Erfindung ist ferner eine Elektrolysevorrichtung, insbesondere für die Chloralkalielektrolyse, aufweisend eine neue erfindungsgemäße Gasdiffusionselektrode als Sauerstoff verzehrende Kathode.

Einzelne für die Beschreibung der Erfindung verwendeten Begriffe werden nachstehend näher erläutert:

**Hg-Porosimetrie**

Die Porenanalyse zur Bestimmung der Porosimetrie und des Porendurchmessers wurde durch Quecksilber-Porosimetrie vorgenommen. Gemessen wurde mit einem Gerät der Fa. Quantachrome, Poremaster 60, mit dem Poren von 3 nm bis 950$\mu$m vermessen werden können.

Wesentlicher Vorzug der Quecksilberporosimetrie ist der große erfassbare Porenbereich. Die Methode funktioniert umgekehrt der Gassorption: Quecksilber, als nicht benetzende Flüssigkeit, wird in die Poren gedrückt, wobei zuerst die großen und erst bei hohen Drücken die kleineren Poren gefüllt werden. Beschrieben wird die Abhängigkeit von Druck und Porenradius traditionell durch die Washburn-Gleichung. Aus den sogenannten Intrusions- und Extrusionskurven erfolgt die Berechnung der Porengrößenverteilung. Weitere Informationen, Oberfläche oder Rohdichte, können zusätzlich durch diese Messmethode gewonnen werden.

**Porosität**

Verhältnis aus Feststoffvolumen zu Leervolumen in der SVE. Aus der Quecksilber-Pyknometrie wird die scheinbare Dichte der SVE bestimmt (Einheit: $g/cm^3$). Die Hg-Porosimetrie liefert das penetrierte Quecksilbervolumen (Einheit: $g/cm^3$), was dem Porenvolumen der eingesetzten Probe entspricht. Aus der scheinbaren Dichte und dem penetrierten Hg-Volumen kann die Porosität errechnet.

**Porosität= penetriertes Hg-Volumen / scheinbare Dichte**

Wenn die berechnete Porosität angegeben wurden, stellt sie dass Verhältnis aus der Summe des Volumen der zugegebenen Komponenten zum Leervolumen dar, die aus der Dichte der SVE berechnet werden kann.

**Porenverteilung**

Verschiedene Porenverteilungen sind möglich, die erfindungsgemäße SVE zeichnet sich durch einen unimodale Porenverteilung aus. Unter unimodal wird hierbei verstanden, dass der Porendurchmesser ein Maximum aufweist, bei einer bimodalen Verteilung würden zwei Maxima erhalten werden.

Die Erfindung wird nachfolgend durch die Beispiele, welche jedoch keine Beschränkung der Erfindung darstellen, näher erläutert.

**Beispiele**

Die entsprechend der folgenden Beispiele hergestellten SVEs wurden bei der Chloralkali-Elektrolyse eingesetzt. Hierzu wurde eine Laborzelle eingesetzt, die aus einem Anodenraum und durch eine Ionenaustauschermembran getrennt, einem Kathodenraum bestand. Im Anodenraum wurde eine Natriumchloridlösung der Konzentration von 200 - 210 g/l eingesetzt, in dem an einer handelsüblichen DSA beschichteten Titanelektrode Chlor erzeugt wurde. Der Kathodenraum wurde vom Anodenraum durch eine handelübliche Kationenaustauschermembran der Fa. DuPont, Typ Nafion® 982, getrennt. Zwischen SVE und der Kationenaustauschermembran bestand einen Elektrolytspalt, in dem eine 32 Gew.-%ige Natronlauge umgepumpt wurde. Die SVE wurde über eine Gasraum mit Sauerstoff, dessen konz. größer als 99,5 Vol-% betrug versorgt. Anoden, Membran- und Gasdiffusionselektrodenfläche betrugen je 100 $cm^2$. Die Temperatur der Elektrolyte betrug 90°C. Die Stromdichte der Elektrolyse betrug bei allen Versuchen 4 kA/$m^2$.

Die SVEs wurden wie folgt hergestellt: 3,5 kg einer Pulvermischung, bestehend aus 5-7 Gew.% PTFE-Pulver, 88 Gew.% Silber-I-Oxid und 5-7 Gew.% Silberpulver (z.B. Typ 331 der Fa. Ferro), wurden in einem Mischer der Fa.

Eirich, Typ R02, ausgerüstet mit einem Sternwirbler als Mischelement, bei einer Drehzahl von 6000 U/min so gemischt, dass die Temperatur der Pulvermischung 55 °C nicht überstieg. Dies wurde dadurch erreicht, dass der Mischvorgang unterbrochen und die Pulvermischung abgekühlt wurde. Insgesamt wurde das Mischen dreimal bei einer Mischzeit von 50 Sekunden und dreimal bei einer Mischzeit von 60 Sekunden durchgeführt. Nach dem Mischen wurde die Pulvermischung mit einem Sieb mit einer Maschenweite von 1,0 mm gesiebt. Die gesiebte Pulvermischung wurde anschließend auf ein elektrisch leitfähiges Trägerelement aufgebracht. Das Trägerelement war ein Netz aus Nickel mit einer Drahtdicke von 0,14 mm und einer Maschenweite von 0,5 mm. Das Aufbringen erfolgte mit Hilfe einer 2 mm dicken Schablone, wobei das Pulver mit einem Sieb mit einer Maschenweite von 1,0 mm aufgebracht wurde. Überschüssiges Pulver, das über die Dicke der Schablone hinausragte, wurde mittels eines Abstreifers entfernt. Nach Entfernung der Schablone wird der Träger mit der aufgebrachten Pulvermischung mittels einer Walzenpresse mit einer Presskraft von 0,45 bis 0,55 kN/cm verpresst. Der Walzenpresse wurde die Gasdiffusionselektrode entnommen.

Die so hergestellten SVE wurden in einer Laborzelle elektrochemisch reduziert.

**Beispiel 1 (erfindungsgemäße SVE) BBS 3533-2 Trockenverfahren**

Die SVE wurde nach dem Trockenverfahren hergestellt, wobei 5 Gew.-% Silber-Pulver der Fa. Ferro, SFQED, 7 Gew.-% PTFE der Fa. DYNEON TF2053 und 88 Gew.-% Silberoxid der Fa. Umicore gemäß gemischt und anschließend mit Walzenpresse bei einer Kraft von 0,46kN/cm verpresst wurde. Die Elektrode wurde in obiger Elektrolysezelle eingesetzt und bei 4 kA/m$^2$ betrieben, die Zellspannung betrug 2,06V. Der mittlere Porendurchmesser der Elektrode betrug 2096 nm bei einem Porenvolumen von 115 mm$^3$/g. Die Porosität betrug 50%, die Dichte ohne den mechanischen Träger 4,21 g/cm$^3$, die Dicke 0,48 mm.

**Beispiel 2 (anderes Porenvolumen) BBS 3543-2 Trockenverfahren**

**(Anmerkung: 2 Gew.-% weniger PTFE und höhere Presskraft als Beispiel 1)**

Die SVE wurde nach dem Trockenverfahren hergestellt, wobei 7 Gew.-% Silber-Pulver der Fa. Ferro, SFQED, 5 Gew.-% PTFE der Fa. DYNEON TF2053 und 88 Gew.-% Silberoxid der Fa. Umicore gemäß gemischt und anschließend mit Walzenpresse bei einer Kraft von 0,50kN/cm verpresst wurde. Die Elektrode wurde in obiger Elektrolysezelle eingesetzt und bei 4 kA/m$^2$ betrieben, die Zellspannung betrug 2,18V. Der mittlere Porendurchmesser der Elektrode betrug 3042 nm bei einem Porenvolumen von 78 mm$^3$/g. Die Porosität betrug berechnet 33,8%, die Dichte ohne den mechanischen Träger 4,33 g/cm$^3$, die Dicke 0,55 mm.

**Beispiel 3 (Vergleichsbeispiel)**

**(Verwendung eines anderen Silberpulvers als Beispiel 1 und 2)**

Die SVE wurde nach dem Trockenverfahren hergestellt, wobei 7 Gew.-% Silber-Pulver der Fa. Ferro, Typ 311, 5 Gew.-% PTFE der Fa. DYNEON TF2053 und 88 Gew.-% Silberoxid der Fa. Umicore gemäß gemischt und anschließend mit Walzenpresse bei einer Kraft von 0,48kN/cm verpresst wurde. Die Elektrode wurde in obiger Elektrolysezelle eingesetzt und bei 4 kA/m$^2$ betrieben, die Zellspannung betrug 2,47V. Der mittlere Porendurchmesser der Elektrode betrug 9515nm bei einem Porenvolumen von 42 mm$^3$/g. Die Porosität betrug 17%, die Dichte ohne den mechanischen Träger 3,81g/cm$^3$, die Dicke 0,57 mm

| Versuch/Bespiel | Porendurchmesser | Porenvolumen | Porosität | Zellspannung |
|---|---|---|---|---|
| | [nm] | [mm$^3$/g] | [%] | V @ 4kA/m$^2$ |
| Beispiel 1 | 2096 | 115 | 50 | 2,06 |
| Beispiel 2 | 3042 | 78 | 36 | 2,18 |
| Beispiel 3 | 9516 | 42 | 17 | 2,47 |

**Patentansprüche**

1. Gasdiffusionselektrode für die Sauerstoffreduktion in wässrigen alkalischen Medien, aufweisend einen Träger, der elektrisch leitend ist, und eine porösen Beschichtung, die auf einem elektrochemisch aktiven Katalysator und einem hydrophoben Material basiert, wobei die Elektrode eine dem Sauerstoff enthaltenden Gas und eine dem alkalischen Elektrolyten zugewandte Seite aufweist, wobei der Katalysator als katalytisch aktive Komponente ein Edelmetall enthält und das hydrophobe Material ein hydrophobes Polymer umfasst, und der Träger der Gasdiffusionselektrode auf Nickel, Silber oder einer Kombination von Nickel und Silber basiert, **dadurch gekennzeichnet, dass** die den Katalysator enthaltende Beschichtung ein Porenvolumen von 20 bis 300 mm$^3$/g aufweist und einen Porendurchmesser im Bereich von 200 bis 8000 nm aufweist, und dass die Elektrode eine Gesamtbeladung an katalytisch aktiver Komponente in einem Bereich von 5 mg/cm$^2$ bis 300 mg/cm$^2$ aufweist.

2. Gasdiffusionselektrode nach Anspruch 1, **dadurch gekennzeichnet, dass** die Beschichtung eine unimodale Porenverteilung aufweist.

3. Gasdiffusionselektrode nach einem der Ansprüche 1 oder 2, **dadurch gekennzeichnet, dass** die Porosität der katalytisch aktiven Beschichtung von 10 bis 70% beträgt.

4. Gasdiffusionselektrode nach einem der Ansprüche 1 bis 3, **dadurch gekennzeichnet, dass** die Dicke der der katalytisch aktiven Beschichtung von 20 bis 1000 $\mu$m beträgt.

5. Gasdiffusionselektrode nach einem der Ansprüche 1 bis 4, **dadurch gekennzeichnet, dass** die hydrophobe Komponente als hydrophobes Polymer ein fluorsubstituiertes Polymer aufweist.

6. Gasdiffusionselektrode nach Anspruch 5, **dadurch gekennzeichnet, dass** die Elektrode eine Gesamtbeladung an katalytisch aktiver Komponente in einem Bereich von 10 mg/cm$^2$ bis 250 mg/cm$^2$ aufweist.

7. Gasdiffusionselektrode nach einem der Ansprüche 1 bis 6, **dadurch gekennzeichnet, dass** der Träger in Form eines Netzes, Gewebes, Gewirkes, Gestrickes, Vlieses, Streckmetalls oder Schaums vorliegt.

8. Verwendung der Gasdiffusionselektrode nach einem der Ansprüche 1 bis 7 als Sauerstoff verzehrende Kathode in der Elektrolyse, oder als Elektrode in einer Brennstoffzelle oder als Elektrode in einer Metall/Luft-Batterie

9. Elektrolysevorrichtung, insbesondere für die Chloralkalielektrolyse, aufweisend eine Gasdiffusionselektrode nach einem der Ansprüche 1 bis 7 als Sauerstoff verzehrende Kathode.

**Claims**

1. Gas diffusion electrode for oxygen reduction in aqueous alkaline media, comprising a carrier which is electrically conductive, and a porous coating based on an electrochemically active catalyst and a hydrophobic material, said electrode having a side facing the oxygen-containing gas and a side facing the alkaline electrolyte, where the catalyst comprises a noble metal as catalytically active and the hydrophobic material comprises a hydrophobic polymer, and the carrier of the gas diffusion electrode is based on nickel, silver or a combination of nickel and silver, **characterized in that** the coating comprising the catalyst has a pore volume of 20 to 300 mm$^3$/g and a pore diameter in the range from 200 to 8000 nm, and **in that** the electrode has a total loading of catalytically active component within a range from 5 mg/cm$^2$ to 300 mg/cm$^2$.

2. Gas diffusion electrode according to Claim 1, **characterized in that** the coating has a unimodal pore distribution.

3. Gas diffusion electrode according to either of Claims 1 and 2, **characterized in that** the porosity of the catalytically active coating is from 10 to 70%.

4. Gas diffusion electrode according to any of claims 1 to 3, **characterized in that** the thickness of the catalytically active coating is from 20 to 1000 $\mu$m.

5. Gas diffusion electrode according to any of Claims 1 to 4, **characterized in that** the hydrophobic component comprises as hydrophobic polymer a fluorine-substituted polymer.

6. Gas diffusion electrode according to Claim 5, **characterized in that** the electrode has a total loading of catalytically active component within a range from 10 mg/cm$^2$ to 250 mg/cm$^2$.

**7.** Gas diffusion electrode according to any of Claims 1 to 6, **characterized in that** the carrier is in the form of a mesh, woven, knitted or nonwoven fabric, expanded metal or foam.

**8.** Use of the gas diffusion electrode according to any of Claims 1 to 7 as an oxygen-consuming cathode in electrolysis, or as an electrode in a fuel cell or as an electrode in a metal/air battery.

**9.** Electrolysis apparatus, especially for chloralkali electrolysis, comprising a gas diffusion electrode according to any of Claims 1 to 7 as an oxygen-consuming cathode.

**Revendications**

**1.** Électrode à diffusion de gaz pour la réduction de l'oxygène dans des milieux alcalins aqueux, comprenant un support, qui est électriquement conducteur, et un revêtement poreux, qui est à base d'un catalyseur électrochimiquement actif et d'un matériau hydrophobe, l'électrode comprenant un gaz contenant l'oxygène et un côté orienté vers l'électrolyte alcalin, le catalyseur contenant un métal noble en tant que composant catalytiquement actif, et le matériau hydrophobe comprenant un polymère hydrophobe, et le support de l'électrode à diffusion de gaz étant à base de nickel, d'argent ou d'une combinaison de nickel et d'argent, **caractérisée en ce que** le revêtement contenant le catalyseur présente un volume poreux de 20 à 300 mm$^3$/g et présente un diamètre de pore dans la plage allant de 200 à 8 000 nm, et **en ce que** l'électrode présente un chargement total en composant catalytiquement actif dans une plage allant de 5 mg/cm$^2$ à 300 mg/cm$^2$.

**2.** Électrode à diffusion de gaz selon la revendication 1, **caractérisée en ce que** le revêtement présente une distribution de pores unimodale.

**3.** Électrode à diffusion de gaz selon l'une quelconque des revendications 1 ou 2, **caractérisée en ce que** la porosité du revêtement catalytiquement actif est de 10 à 70 %.

**4.** Électrode à diffusion de gaz selon l'une quelconque des revendications 1 à 3, **caractérisée en ce que** l'épaisseur du revêtement catalytiquement actif est de 20 à 1 000 $\mu$m.

**5.** Électrode à diffusion de gaz selon l'une quelconque des revendications 1 à 4, **caractérisée en ce que** le composant hydrophobe comprend en tant que polymère hydrophobe un polymère à substitution par fluor.

**6.** Électrode à diffusion de gaz selon la revendication 5, **caractérisée en ce que** l'électrode présente un chargement total en composant catalytiquement actif dans une plage allant de 10 mg/cm$^2$ à 250 mg/cm$^2$.

**7.** Électrode à diffusion de gaz selon l'une quelconque des revendications 1 à 6, **caractérisée en ce que** le support se présente sous la forme d'un filet, d'un tissu, d'une étoffe tricotée, d'une étoffe crochetée, d'un non-tissé, d'un métal déployé ou d'une mousse.

**8.** Utilisation de l'électrode à diffusion de gaz selon l'une quelconque des revendications 1 à 7 en tant que cathode à consommation d'oxygène dans l'électrolyse, ou en tant qu'électrode dans une pile à combustible, ou en tant qu'électrode dans une batterie métal/air.

**9.** Dispositif d'électrolyse, notamment pour l'électrolyse chlore-alcali, comprenant une électrode à diffusion de gaz selon l'une quelconque des revendications 1 à 7 en tant que cathode à consommation d'oxygène.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1219553
- EP 797265 A
- US 6503655 A
- US 6503655 B
- WO 07116095 A2
- WO 2001057290 A2
- DE 4444114 A2

- WO 200218675 A
- DE 3710168 A2
- EP 144002 A2
- DE 102005023615 A2
- US 6838408 B
- DE 10148599
- DE 10130441 A

**In der Beschreibung aufgeführte Nicht-Patentliteratur**

- **MOUSSALLEM et al.** Chlor-Alkali Electrolysis with Oxygen Depolarized Cathodes: History, Present Status and Future Prospects. *J. Appl. Electrochem.,* 2008, vol. 38, 1177-1194

- Peroxide formation during chlor-alkali electrolysis with carbon-based ODC. **LIPP et al.** J. Appl. Electrochem. Los Alamos National Laboratory, 2005, vol. 35, 1015